# EUROPEAN PATENT APPLICATION

(11) **EP 1 385 337 A1**
(43) Date of publication of application: **28.01.2004**
(21) Application number: 02016412.5
(22) Date of filing: 22.07.2002
(51) Int. Cl.: H04N 7/24, G11B 27/00, G11B 15/18, G11B 27/10

(54) **Method and apparatus for storing and transmitting audio-visual data**

(71) Applicant: DEUTSCHE THOMSON-BRANDT GMBH, 78048 Villingen-Schwenningen (DE)
(72) Inventor: Schiller, Harald, 30539 Hannover (DE); Ostermann, Ralf, 30167 Hannover (DE); Blawat, Meinolf, 30161 Hannover (DE); Herpel, Carsten, 30171 Hannover (DE); Schewzow, Andrej, 30165 Hannover (DE)
(74) Representative: Rittner, Karsten, Dr.

(57) **Abstract**

Within a compressed audio-visual bit stream compression parameter sets are transmitted or stored prior to any other data referencing or using them. A special positioning is proposed for those compression parameter sets needed in cases of trick play. Embodiments are given for an extended DVD video compression scheme, where compression parameter sets of global and local nature have to be maintained in a framework of established processing units like "Cells" or "Video object units".

## Description

The invention relates to a method and to an apparatus for storing and transmitting audio-visual data.

### Background

In the field of compressing audio-visual (AV) data the technological trend goes towards increasingly parameter-oriented descriptions. Seen from an encoding point of view, compression parameters in general specify, in which of several possible modes certain parts of the encoder input (AV data) shall be processed. Correspondingly, from a decoding point of view, those same compression parameters indicate, according to which of several allowable rules a section of a given compressed bit stream shall be converted back into a piece of AV data. Compression parameters can be of different nature; assuming a compression scheme where pictures are subdivided into slices, they may be "global parameters (GP)", "picture layer parameters (PLP)" and "slice layer parameters (SLP)". It is expected that GP are mostly constant, since they express parameters such as picture size or color space. However, they could be changed at the start of a random access unit, such as a GOP. Therefore, a small set of different GP sets will be referenced from within an AV bit stream. PLPs express parameters that might change more frequently, at a maximum on a per-picture basis. Hence, each coded picture will reference one out of a potentially larger set of such PLPs. Similarly, different SLPs could be referenced by each coded slice within a coded picture. It is expected that GP are mostly predetermined by the nature of the specific AV material being compressed, whereas PLP and SLP can be freely chosen as part of the encoder optimization. For the latter, the selection is likely to be based on some kind of compression efficiency measure quantifying either the coding error or the compression bit rate or both. The above-mentioned technology will be used in the developing MPEG-4 Part 10, also known as H.26L or JVT codec.

### Invention

The invention is based on the recognition of the following facts.

In addition to specifying and appropriately selecting the compression parameters, they themselves must in most cases be transmitted or stored along with the AV data proper, in order to allow a meaningful decoding. This task needs to be tackled separately for each application domain, wherein the transmission or storage of compression parameters has to fulfil several, partly conflicting requirements.
- **Compactness:**
   On a global as well as local level, compression parameter description must be kept compact, such that the total bandwidth needed for AV plus parameters does not outweigh any gain in compression efficiency achieved by a parameterized approach. This includes a strong motivation to avoid any unnecessary repetition or other redundancy present in the compression parameters.
   Consequently, the indexing mechanism from a coded picture or slice to the parameter set(s) will bound the number of parameter sets of each type that can be addressed, in order to reach the compactness goal. Hence, it must be specified whether it is possible that two different parameter sets are identified by the same (numeric or other) label. In other words, a name scope for the labels of parameter sets needs to be established.
- **Decodability:**
   With AV data, especially on a storage medium, being prone to be accessed in non-sequential, random ways, any parameter set allocation scheme must ensure that all required compression parameters are made available when entering and decoding a bit stream at any of its entry points. This includes the important cases of any kind of trick play, and may entail allowing certain controlled forms of data redundancy.
- **Compatibility:**
   When designing an extension of an existing specification, such as DVD for optical storage, it is desirable to maintain as many as possible of the well-understood and established system concepts. Solutions taking this into account are likely to be judged favorably in the standardization process.

Therefore, a problem to be solved by the invention is to store/transmit compression parameter sets such that those sets needed for decoding at an entry point are instantaneously available, hence optimizing for decodability without sacrificing too much bit rate.

This problem is solved by the method disclosed in claim 1. An apparatus that utilizes this method is disclosed in claim 6. A corresponding decoding method and apparatus is claimed in claim 7 and 8, respectively.

According to the inventive method a number of coding parameter sets being referenced from within the coded data of a picture or of a part of a picture are used. A first group of coding parameter sets that are being referenced within the first picture of a group of independently accessible coded pictures are inserted before the coded data of said first picture. A second group of said coding parameter sets that are being referenced in subsequent coded pictures of said group of independently accessible coded pictures are inserted after the coded data of said first picture.

Advantageously, the second group of said coding parameters sets is placed immediately after the coded data of said first picture.

Advantageously, each coding parameter set of said second group of coding parameter sets is individually placed within said group of independently accessible coded pictures before the coded data of that picture where said coding parameter set is first being referenced.

Furthermore, it is of advantage that the numeric or other labels of each said coding parameter set need only be unique within each of said groups of independently accessible coded pictures.

According to a further advantageous embodiment both the coded data of pictures or parts of pictures as well as the coding parameter sets are conveyed in data packets for placement in an underlying storage or transmission format or protocol.

Further advantageous embodiments of the invention result from the following description.

### Drawing

Exemplary embodiments of the invention are described with reference to the accompanying drawings, which show in:
- Fig.1: an AV stream with separate parameter sets;
- Fig.2.: an AV stream with in-band parameter sets;
- Fig.3.: an AV stream with in-band parameter sets, only included before their first reference.

### Exemplary embodiments

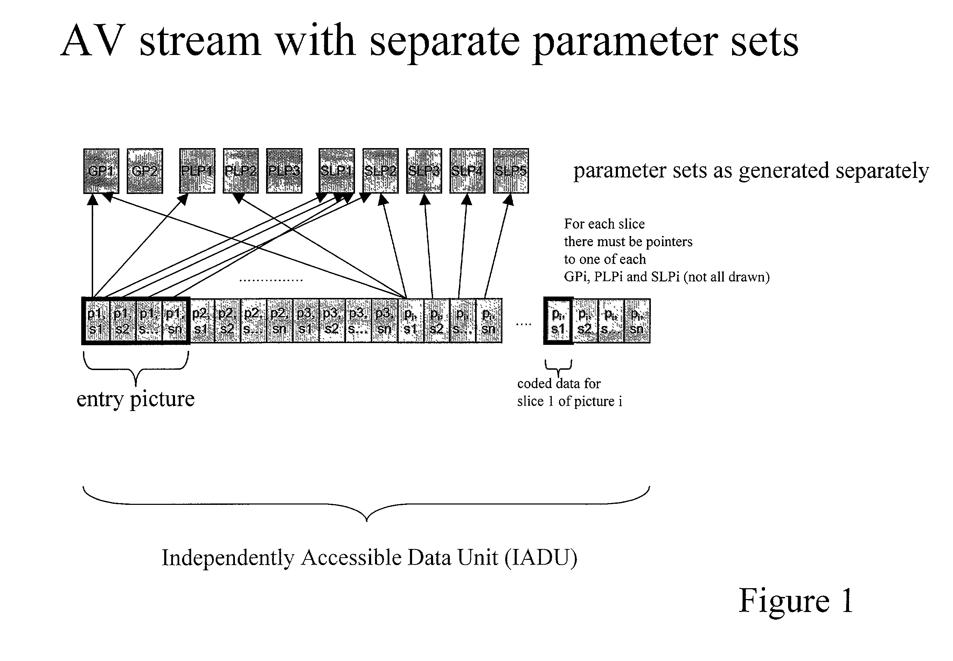

The initially separate parameter sets shown in Figure 1 are reinserted into the main AV bit stream. This eliminates the name scope problem for parameter set labels and allows for easy random access into the AV bit stream without the need to read any auxiliary data from elsewhere on the medium. An audiovisual data format on a storage medium as well as in a broadcast transmission system will usually exhibit individually accessible data units (IADU), that permit the playback to be started at multiple locations within the AV bit stream. In the realm of MPEG video compression, IADU corresponds to the concept of "Group of Pictures" (GOP), in DVD to "Cell" or "Video Object Unit" (VOBU). Each IADU commonly starts with an entry picture (intra-coded frame) that is decodable independent from any other data in the AV bit stream, with the exception of the reference to the needed parameter sets, possibly one reference each to a GP, PLP and SLP for each coded slice within the picture.

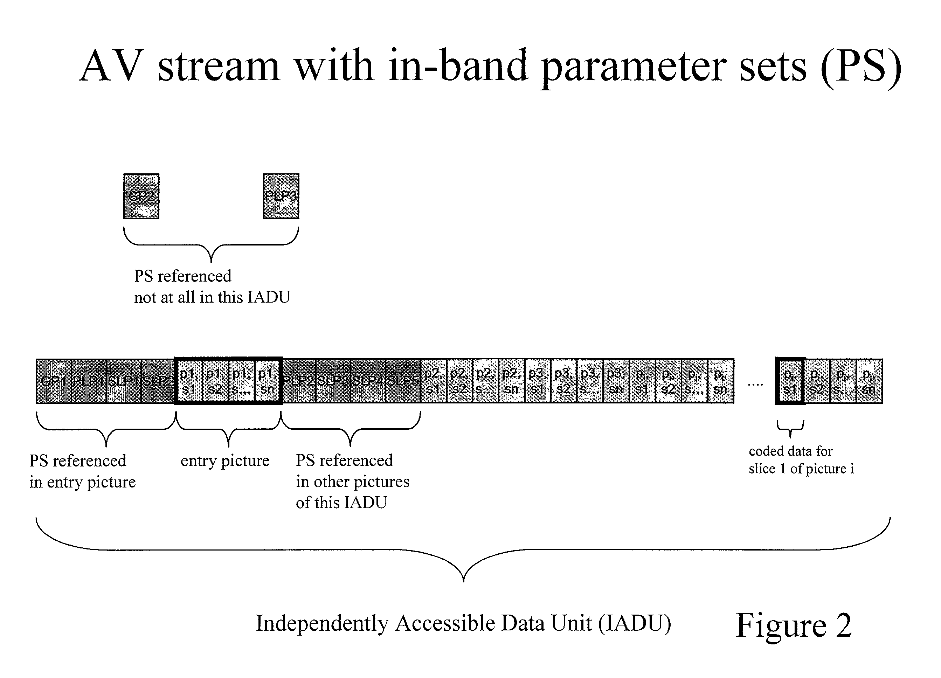

All those parameter sets (and only those) that are being referenced within the entry picture right before the coded data of that same entry picture are reinserted as depicted in Figure 2 or, alternatively, in a systems-level container (e.g. NAV PACK in DVD) that precedes the entry picture. The reinserted parameter sets can now be referenced by their label from any picture within the IADU. The name scope of the label is limited to the IADU. Other pictures after the entry picture may reference other PLP or SLP sets that have not yet been conveyed.

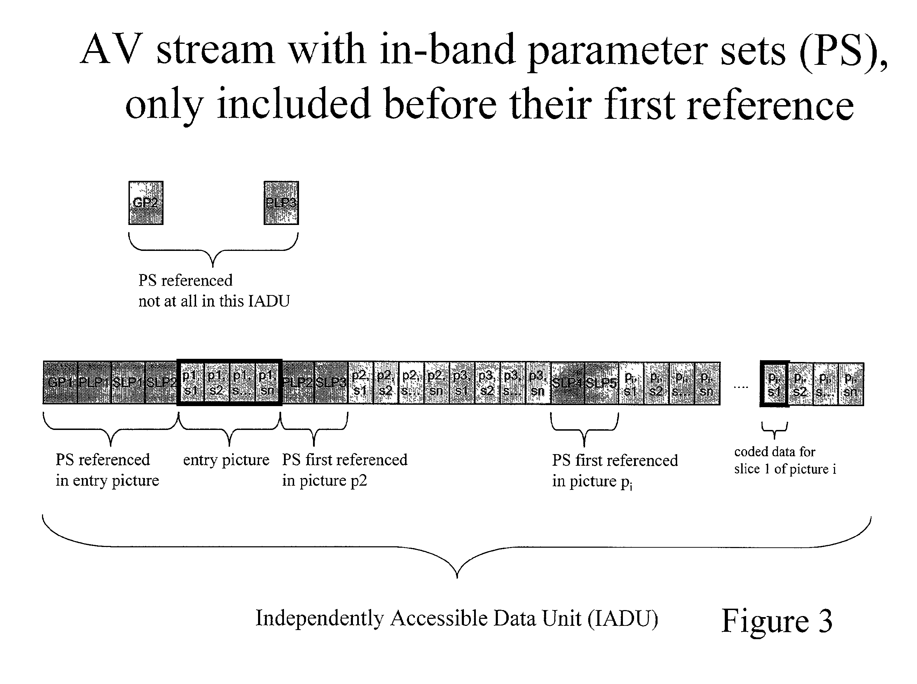

These PLP and SLP sets are conveyed right after the coded data of the entry picture. This has the advantage that those parameter sets need not to be read in trick mode, when only the entry picture of each IADU is needed. Furthermore, to ease the adaptation of AV data where parameter sets are generated on the fly as needed during encoding, an option erated on the fly as needed during encoding, an option may be foreseen, to insert each parameter set at any valid location preceding the point in the bit stream where it is first being referenced as depicted in Figure 3.

One specific embodiment of the present invention, assuming carriage of MPEG-4 Part 10 video content over MPEG-2 Systems transport, requires a normative statement (through an amendment) in the MPEG-2 Systems spec (IS 13818-1:2000) to the extent that, within a PES stream, any network abstraction layer (NAL) units carrying a parameter set with a specific numeric label (parameter_set_id) shall precede any NAL units conveying coded video data which either directly reference said specific parameter set or for the decoding of which said specific parameter set is necessary. Furthermore, a normative statement is required that such parameter set NAL units shall be retained by the decoder for further reference within the name scope of the parameter_{_}set_{_}ids. Finally, the definition of the name scope for parameter_set_ids should not be done within MPEG-2 Systems, but explicitly be delegated to application specifications, such as an extension to the DVD spec.

As an embodiment of the present invention on the DVD side, a future extension of DVD encompassing parameterized video compression might be based on the following normative statements: That the scope of parameter_set_ids of Global Parameters (GPs) corresponds to a Cell, and that therefore video data in the first video packet in a Cell shall start with NAL units containing all GPs being referenced within that Cell, followed by video data for the VOBUs of the Cell; and that these GPs shall be retained in the decoder until the end of the Cell playback. Further, that the scope of parameter_{_}set_{_}ids of PLPs and SLPs corresponds to a VOBU, and that therefore video data for each VOBU shall start with NAL units containing all PLPs and SLPs being referenced within the first reference picture of the VOBU; that subsequent NAL units might also contain further PLPs and SLPs, using different parameter_set_ids, if they are being referenced in subsequent pictures of the VOBU; and that any such PLPs and SLPs shall be retained in the decoder until the end of the VOBU playback.

An advantage of the invention is that placing the entry picture parameter sets between the entry point and the subsequent entry picture data optimizes access speed and data availability. Placing the other needed parameter sets after the coded data of the entry picture avoids having to read such data in trick modes where they are not needed.

The necessity to repeat all used parameter sets for each IADU slightly increases the bit rate of the overall stream, however, since each used parameter set occurs only once in the bit stream, this solution is still superior to classical repetition of coding parameters on a picture or slice basis.

The invention is especially useful for transport or storage of AV bit streams. However, the invention is also applicable to other kinds of bit streams.

## Claims

1. Video coding method using a number of coding parameter sets being referenced from within the coded data of a picture or of a part of a picture, wherein a first group of coding parameter sets that are being referenced within the first picture of a group of independently accessible coded pictures are inserted before the coded data of said first picture while a second group of said coding parameter sets that are being referenced in subsequent coded pictures of said group of independently accessible coded pictures are inserted after the coded data of said first picture.

2. Video coding method according to claim 1, wherein the second group of said coding parameters sets is placed immediately after the coded data of said first picture.

3. Video coding method according to claim 1, wherein each coding parameter set of said second group of coding parameter sets is individually placed within said group of independently accessible coded pictures before the coded data of that picture where said coding parameter set is first being referenced.

4. Video coding method according to any of claims 1 to 3, wherein the numeric or other labels of each said coding parameter set need only be unique within each of said groups of independently accessible coded pictures.

5. Video coding method according to any of claims 1 to 3, wherein both the coded data of pictures or parts of pictures as well as the coding parameter sets are conveyed in data packets for placement in an underlying storage or transmission format or protocol.

6. Video coding apparatus using a method according to any of claims 1 to 5.

7. Video decoding method for decoding a video signal coded according to any of claims 1 to 5.

8. Video decoding apparatus using a method according to claim 7.
